# EUROPEAN PATENT APPLICATION

(11) **EP 3 133 385 A1**
(43) Date of publication of application: **22.02.2017**
(21) Application number: 15181214.6
(22) Date of filing: 17.08.2015
(51) Int. Cl.: G01N 21/19, G02B 5/30, G02B 27/26

(54) **AN ARRANGEMENT AND A SYSTEM COMPRISING CHIRAL OBJECTS**

(71) Applicant: Karlsruher Institut für Technologie, 76131 Karlsruhe (DE)
(72) Inventor: FERNANDEZ CORBATON, Ivan, 76133 Karlsruhe (DE); ROCKSTUHL, Carsten, 76189 Karlsruhe (DE)
(74) Representative: Herzog, Fiesser & Partner Patentanwälte PartG mbB

(57) **Abstract**

In particular, the present invention relates to an arrangement (130) and its use for circular dichroism measurements of at least one chiral molecule (132). The arrangement (130) comprises at least two chiral objects (124), wherein the chiral objects (124) are closely located with respect to each other. Herein, a first chiral object (126) is additionally designed for scattering and/or absorbing only a first polarization handedness of an incident electromagnetic field (110) in a manner that an electromagnetic field scattered by the first chiral object (126) only comprises the first polarization handedness and, further, for being transparent to a second polarization handedness of the incident electromagnetic field (110), wherein a second chiral object (128) is additionally designed for scattering and/or absorbing only the second polarization handedness of the incident electromagnetic field (110) in a manner that an electromagnetic field scattered by the second chiral object (128) only comprises the second polarization handedness and, further, for being transparent to the first polarization handedness of the incident electromagnetic field (110). Herein, the first polarization handedness and the second polarization handedness comprise an opposite sign.

Further, a system (148) comprising at least two pluralities of chiral objects (124) of the mentioned kind and its use as part of a viewing apparatus for three-dimensional images, wherein the three-dimensional images are encoded in two opposite circular polarizations, is disclosed.

## Description

### Field of the invention

The present invention relates to an arrangement and to a system which comprise chiral objects as well as their use. In particular, the present invention relates to an arrangement comprising at least two chiral objects and its use as well as to a system comprising at least two pluralities of chiral objects and its use.

### Related art

As known from the state of the art, a chiral object is an object which cannot be super-imposed onto its mirror image. The chiral objects are ubiquitously present, particularly, in the fields of chemistry and biology. A particular example relates to a chiral molecule which comprises two different enantiomers constituting two different entities which cannot be super-imposed with respect to each other, such as by rotating. As a result, the two different enantiomers may exhibit a particular different behavior, such as in drugs.

In order to obtain information about a specific chiral object an interaction of the chiral object with an incident electromagnetic field impinging on the chiral object may be studied by using different circular polarizations. Within this respect, the chiral object may interact in a different manner to an incident electromagnetic field which comprises a specific polarization handedness. For this purpose, the incident electromagnetic field may comprise circularly polarized light which occurs when the direction of an electromagnetic field vector rotates about a propagation direction, thereby retaining the magnitude of the electromagnetic field vector as a constant value. As a result, when the electromagnetic field propagates towards an observer, left circularly polarized light or right circularly polarized light may be obtained, depending on whether the electric vector rotates counterclockwise or clockwise, respectively. In other words, the propagating electromagnetic field comprises a definite value for a helicity, wherein the term "helicity" refers to one of the two directions of the polarization handedness of the propagating electromagnetic field. Thus, the chiral object usually exhibits a differential absorption of left- and right-handed light. As a result, information about the specific chiral object may be obtained from a scattering experiment by using a fixed incident helicity of the impinging electromagnetic field which cannot be obtained by using the opposite helicity.

Various types of artificially designed structures which function as chiral objects are known. I. V. Semchenko, S. A. Khakhomov, and A. L. Samofalov, Optimal Helix Shape: Equality Of Dielectric, Magnetic, And Chiral Susceptibilities, Russian Physics Journal, Vol. 52, No. 5, p. 472-79, 2009, disclose single-turn helices which are adapted for converting a linearly polarized electromagnetic wave into a circularly polarized wave. Herein, the helices which can be activated by both electric and magnetic fields, i.e. for any arbitrary orientation of the incident wave polarization plane, comprise equal dielectric, magnetic, and chiral susceptibilities. Further, a two-dimensional array comprising 256 ordered single-turn left-helix elements is presented.

A. O. Karilainen and S. A. Tretyakov, Circularly Polarized Receiving Antenna Incorporating Two Helices to Achieve Low Backscattering, IEEE Transactions On Antennas And Propagation, Vol. 60, No. 7, p. 3471-75, 2012, disclose an antenna composed of two orthogonal helices as a low-scattering sensor. The antenna is adapted to transmit and receive circular polarization in all directions. Thus, the antenna geometry does not backscatter, regardless of the polarization, when the incidence direction is normal to the plane of the helices.

### Problem to be solved

It is therefore an objective of the present invention to provide an arrangement and a system comprising chiral objects and their respective use which are at least partially adapted to overcome shortcomings of the state of the art.

It is a particular objective of the present invention to provide an arrangement which might be suitable for improving circular dichroism measurements by allowing a clear distinction between two possible enantiomers of a specific chiral molecule.

It is a further objective of the present invention to provide a system which might be adapted for improving a filtering of incident electromagnetic fields comprising the two types of the polarization handedness with respect to their helicity.

### Summary of the invention

This problem is solved by an arrangement having at least two chiral objects and its use and by a system having at least two pluralities of chiral objects and its use comprising the features of the independent claims. Preferred embodiments, which might be realized in an isolated fashion or in any arbitrary combination, are listed in the dependent claims.

As used in the following, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, as used in the following, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

In a first aspect, the present invention relates to an arrangement comprising at least two chiral objects, wherein the chiral objects are closely located with respect to each other. In particular, the arrangement comprises two chiral objects, wherein a first chiral object is closely located with respect to a second chiral object. Herein, the first chiral object is additionally designed
- for scattering and/or absorbing only a first polarization handedness of an incident electromagnetic field which impinges on the arrangement in a manner that an electromagnetic field scattered by the first chiral object only comprises the first polarization handedness, and, concurrently,
- for being transparent to a second polarization handedness of the incident electromagnetic field.

Similarly, the second chiral object is additionally designed
- for scattering and/or absorbing only the second polarization handedness of the incident electromagnetic field which impinges on the arrangement in a manner that an electromagnetic field scattered by the second chiral object only comprises the second polarization handedness, and, concurrently,
- for being transparent to the first polarization handedness of the incident electromagnetic field.

Within this respect, the first polarization handedness and the second polarization handedness comprise an opposite sign.

Thus, the present invention relates to a specific kind of chiral object, which may also be denominated as "maximally electromagnetically chiral object". This kind of chiral object interacts only with one of the two possible helicities of the incident electromagnetic field which impinges onto the chiral object. Consequently, this kind of chiral object is hence transparent for the other possible helicity. In addition to interacting only with one helicity of the incident electromagnetic field, this kind of chiral object is helicity preserving. As used herein, the term "helicity preservation" refers to a property that a scattered electromagnetic field which may result from an interaction of the incident electromagnetic field of one helicity with this kind of chiral object does not comprise any component which corresponds to the helicity opposite to the incident helicity. As a result, a given helicity can be assigned to this kind of chiral object, which means that this kind of chiral object only interacts with this given helicity.

As used herein, the term "arrangement" refers to a presence of at least two of the chiral objects, in particular of two of the described kind of chiral objects, which are closely located with respect to each other. Herein, the chiral objects may, preferably, assume a form of a helix element which comprises at least one turn. In particular, the chiral objects may assume the form of a single-turn helix element, such as the helix element as described in Semchenko et al.

Further, the arrangement may comprise one or more additional objects. Preferably, a detector may, in particular, be adapted for determining at least one property of the incident electromagnetic field which may impinge on the detector. Within this respect, the property of the incident electromagnetic field may refer to a measurable attribute in relationship to the incident electromagnetic field, in particular, to one of an intensity, a power, an amplitude, a helicity, a wavelength, or a frequency. However, other attributes may be determinable by using the detector.

As mentioned above, the at least two chiral objects are closely located with respect to each other. As used herein, the term "closely located" refers to a configuration of the chiral objects in which the chiral objects are placed in a manner that they are impinged by substantially the same electromagnetic field. Thus, although being two individual objects placed on two distinct locations, the two closely located chiral objects, nevertheless, behave as being situated on the same location as viewed from the incident electromagnetic field. This feature is, generally, obtained in a situation in which the wavelength of the incident electromagnetic field is of the same order of magnitude as a difference in location between the two closely located objects.

Further according to the present invention, each chiral object is designed to react to the incident electromagnetic field impinging on the arrangement in a characteristic manner. Herein, the electromagnetic field may be characterized by a wavelength or, alternatively, by a frequency. Accordingly, the incident electromagnetic field may assume one or more individual wavelengths or frequencies or, alternatively, a spectral range of wavelengths or frequencies. Herein, the frequency may be selected from at least one of a radio, a microwave, an infrared, a visible, or an ultraviolet frequency, wherein, the microwave, the infrared, or the visible frequency may be of particular interest. Particularly in the infrared or visible spectral range, the incident electromagnetic field may also be denoted as "illumination"; however, this term is applied here for all potential spectral ranges.

According to the present invention, each chiral object is designed for providing a number of specific characteristics in an event in which the incident electromagnetic field impinges onto the arrangement and, thus, onto the closely located chiral objects of the arrangement. Within this regard, it is emphasized that each chiral object according to the present invention interacts only with one of two possible values for the helicity. As generally used, the term "helicity" refers to one of two directions of a polarization handedness of a propagating electromagnetic field. For this purpose, the helicity may assume a value of "+1" or of "-1", wherein the value of "+1" is related to counterclockwise rotation of the propagating electromagnetic field while the value of "-1" refers to a clockwise rotation of the propagating electromagnetic field. Within this regard, the values of "+1" and of "-1" are considered as the opposite sign with respect to each other. However, other kinds of assignments may be possible.

A first specific characteristic of each chiral object according to the present invention comprises a transparency of each of this kind of chiral object with respect to a partition of an incident electromagnetic field which comprises a polarization handedness that is different from the helicity that the chiral object interacts with. By way of example, a selected chiral object of this kind exhibiting a helicity of "+1" which is impinged by a specific electromagnetic field comprising a polarization handedness of "-1" behaves as a transparent object with respect to the specific electromagnetic field. This means that the specific electromagnetic field which comprises the polarization handedness of "-1" may permeate the selected kind of chiral object having the helicity of "+1".

A second specific characteristic of each chiral object according to the present invention comprises helicity preservation. Upon interaction of this kind of chiral object with an incident electromagnetic field of the helicity that this kind of chiral object interacts with, a scattered electromagnetic field may be produced. Herein, the scattered electromagnetic field does not comprise any component of the helicity opposite to the incoming helicity. Whether this kind of chiral object may actually only scatter or only absorb or both scatter and absorb the respective partition of the incident electromagnetic field, depends on a selected embodiment of the selected chiral object. In a particularly preferred embodiment, an intensity of the incident electromagnetic field which impinges on the arrangement may, through a resonant behavior, be enhanced by that kind of chiral object which may be designed for scattering and/or absorbing the same polarization handedness as comprised by the incident electromagnetic field. By way of example, a selected chiral object of this kind exhibiting a helicity of "+1" which is impinged by a specific electromagnetic field comprising a polarization handedness of "+1" scatters the specific electromagnetic field. Due to helicity preservation, the scattered electromagnetic field does not comprise any component of helicity "-1".

A third specific characteristic of each of this kind of chiral object may additionally comprise that the chiral object may exhibit an identical behavior with respect to the transparency and the helicity preservation, irrespective whether the incident electromagnetic field may be at least one of a far electromagnetic field, an intermediate electromagnetic field, or a near electromagnetic field. As generally used, the terms "near electromagnetic field", "intermediate electromagnetic field", and "far electromagnetic field" are regions of the electromagnetic field around the chiral object, wherein the electromagnetic field may be an external electromagnetic field an/or a resulting electromagnetic field generated by the scattering of the chiral object. As generally known, the power of the near electromagnetic field decreases with the third power of an increasing distance from the chiral object whereas the power of the far electromagnetic field decreases with a square of the increasing distance from the chiral object. Further, the term "intermediate electromagnetic field", thus, refers to a transition zone between the near electromagnetic field and the far electromagnetic field with respect to the chiral object. As an example, an arbitrarily complex near electromagnetic field of pure helicity cannot excite a specific chiral object which is transparent to this kind of helicity. As a further example, a specific chiral object which interacts only with electromagnetic fields of helicity "-1" cannot respond to electromagnetic fields of helicity "+1", independently of a complexity of such field, e.g. in a near field situation.

In a further aspect, the present invention relates to a use of the arrangement comprising the at least two chiral objects of the kind as disclosed above. Herein, the use of the arrangement refers to circular dichroism measurements of at least one chiral molecule or chiral compound which is located in the vicinity of the arrangement. The measurements may be performed in order to be able to provide a, preferably, clear distinction between the two possible enantiomers of the chiral molecule or the two states of the chiral compound, which may, for example, comprise a chiral mineral compound or a chiral organic compound.

As described above, the chiral molecule or the chiral compound absorbs the two polarization handedness of the incident electromagnetic field in different amounts. This observation can be used to determine which enantiomer may be dominant in a solution. By way of example, in a case in which a first enantiomer absorbs the + polarization with a strength of 5 and the - polarization with a strength of 3, the second enantiomer exhibits the opposite behavior, i.e. it absorbs the + polarization with a strength of 3 and the - polarization with a strength of 5. Herein, the values of 3 and 5 are given in arbitrary units; also other values may be applicable. As a result, the difference between the absorption of the two kinds of polarizations is the signal acquired by the circular dichroism measurements.

In practice, however, a contribution of each chiral molecule to the difference is rather small, in particular, in case of a low molecular concentration. As according to the state of the art, the absorption is generally measured by using a specific spectroscopic device, the signal-to noise-ratio of the measurement in a sample, primarily, depends on an intensity of the light source, a quantum efficiency of the detector, and a measurement time. Herein, the measurement time accounts for an individual integration time during recording the signal at each individual wavelength and acquiring multiple signals from the same sample which may be averaged afterwards. Whereas the intensity of the light source cannot be unlimitedly increased, the quantum efficiency of the detector cannot exceed unity. Thus, the signal-to-noise ratio may, primarily, be enhanced by increasing the integration time, which, however, may be difficult with real-time monitoring at low concentrations.

According to the present invention, the arrangement comprising the at least two chiral objects of different helicities is used for reacting to an opposite handedness of the incident light. For this purpose, the at least one chiral molecule under investigation is placed in the vicinity of the arrangement and treated in accordance with the following procedure. As described above, an external illumination source providing an electromagnetic field comprising a given polarization handedness illuminates only a first chiral object of corresponding helicity, which, in turn, illuminates the chiral molecule with a strong electromagnetic field of the same handedness. As a result, the chiral molecule reacts to the illumination and generates electromagnetic fields of both handedness, wherein the electromagnetic field of the handedness being opposite to the external electromagnetic field excites a second chiral object of corresponding opposite helicity, which, through a resonant behavior, produces a strong electromagnetic field whose polarization can be measured, in particular, by a suitable detector. After the procedure has been performed in the described fashion, it may be repeated in a manner that both polarizations of the external illumination source and of the detector are switched.

It may be emphasized that two kinds of resonant enhancements may be obtained during this procedure. Herein, the first chiral object amplifies the external illumination while the second chiral object amplifies the weak field as generated by the at least one chiral molecule. Two main advantages are involved with this procedure. First, the chiral molecules are illuminated by a strong electromagnetic field which comprises only a single handedness. Second, the circular dichroism measurement is free of a background, i.e. the acquired signal may only exist in a case in which chiral molecules are present in the vicinity of the arrangement.

Thus, the arrangement provides specific advantages with respect to the state of the art. First, metallic structures are used which can produce strong near fields when excited by an external illumination, in particular by plasmons, i.e. collective excitations of the free electrons in the metal. A problem is that plasmonic structures that are chiral but mix both kinds of polarization handedness usually generate a strong additional signal of their own, thereby complicating a detection of the signal due to the presence of the chiral molecules. Second, using strong near electromagnetic fields for the characterization of chiral molecules is also known. However, when illuminating a chiral object which does not exhibit the second specific characteristic of producing only a single polarization handedness upon scattering, the at least one chiral molecule is illuminated by both kinds of polarization handedness. As a result, it is, thus, not possible to measure the reaction of the molecule to the incident illumination having the single polarization handedness alone.

For further details concerning the use of the arrangement reference may be made to the description of the arrangement above and/or below.

In a further aspect, the present invention relates to a system comprising at least two pluralities of chiral objects of the kind as described above, wherein each of the pluralities is randomly arranged in an individual volume separated from each other. In particular, the system comprises a first plurality of first chiral objects which are randomly arranged in a first individual volume and a second plurality of second chiral objects which are randomly arranged in a second individual volume, wherein the first individual volume is completely separated from the second individual volume. Herein, the first plurality of first chiral objects is additionally designed
- for scattering and/or absorbing only a first polarization handedness of an incident electromagnetic field which impinges on the first plurality in a manner that an electromagnetic field scattered by the first chiral objects only comprises the first polarization handedness and, concurrently,
- for being transparent to a second polarization handedness of the incident electromagnetic field.

Similarly, the second plurality of second chiral objects is additionally designed for
- scattering and/or absorbing only the second polarization handedness of the incident electromagnetic field which impinges on the second plurality in a manner that an electromagnetic field scattered by the second chiral objects only comprises the second polarization handedness and, concurrently,
- for being transparent to the first polarization handedness of the incident electromagnetic field.

Herein, the first polarization handedness and the second polarization handedness comprise an opposite sign.

As used herein, the term "plurality" related to a multitude of objects which comprise at least one common property. Herein, each of the chiral objects in a definite plurality may, particularly, be identical with respect to helicity but may be distinct with regard to other properties, especially location and spatial orientation.

In a particularly preferred embodiment, each of the pluralities comprising a multitude of chiral objects of the same helicity is arranged in form of an individual slab. Herein, the form of the slab, which comprises a volume having two major parallel surfaces separated by a comparatively short distance, exhibits a particular advantage that an incident electromagnetic field impinging on one of the major surfaces of the slab may easily penetrate the slab with little absorption. Thus, the incident electromagnetic field impinging onto the slab comprising that plurality of the chiral objects which are designed for absorbing the same polarization handedness as the incident electromagnetic field absorbs at least a part the incident electromagnetic field, preferably from 95 % to 100 %. In this preferred embodiment, the slabs may be located in an angle with respect to each other, wherein the angle may be determined by comparing a relative alignment of the major surfaces of each slab.

For further details concerning the system reference may be made to the description of the arrangement above and/or below.

In a further aspect, the present invention relates to a use of the system comprising the at least two pluralities of chiral objects of the kind as described above as part of a viewing apparatus for three-dimensional images, wherein the three-dimensional images are encoded in two opposite circular polarizations. Herein, a projector is used which is adapted to produce and transmit each of two slightly different images into each of the two polarization handedness simultaneously in time, wherein the two slightly different images are, subsequently, combined into a three-dimensional image. Therefore, an application of two versions of a filter of polarization handedness would be desired. For this purpose, two individual slabs are provided, wherein each of the slabs comprises randomly arranged absorbing chiral objects of a definite handedness such that the two slabs differ with respect to each other with regard to the handedness of the comprised chiral objects. As a result, each of the slabs is, thus, designed for filtering out a different handedness by absorption. Having encoded a specific three-dimensional image in the two opposite circular polarizations, each slab may provide a partition of the specific three-dimensional image which comprises only a single handedness of the image. The complete image may, thereafter, be obtained by combining the two partitions of the specific three-dimensional image. Herein, the viewing apparatus may be designed to view one or more three-dimensional images, wherein the slabs may be part of viewing apparatus or, alternatively, comprise separate units.

As mentioned above, the chiral objects according to the third specific characteristic may exhibit an identical behavior with respect to the transparency and the helicity preservation, irrespective of whether the incident electromagnetic field may be at least one of a far electromagnetic field, an intermediate electromagnetic field, or a near electromagnetic field. This independence together with the random distribution of the plurality of the chiral objects within the slab may exhibit a further advantage that an efficiency of the system can be independent from a direction of incidence of the electromagnetic field onto the slab. As a result, an angle between the incident electromagnetic impinging onto the viewing apparatus and the viewing apparatus may be arbitrary and may, thus, exceed a first value of 30° in a horizontal direction and a second value of 10° in a vertical direction. Herein, each of the two major surfaces of the slab may comprise a rectangular form having a longer edge and a smaller edge in a manner that the horizontal direction may be parallel to the longer edge while the vertical direction may be parallel to the shorter edge.

These features are in contrast to a state-of-the-art viewing apparatus for three-dimensional signals which are encoded in the polarization handedness as, for example, illustrated in www.displaymate.com/3D_TV_ShootOut_1.htm. The data as presented there agree with a common understanding that a known three-dimensional viewing apparatus which uses a quarter wave plate and a linear polarizer work for up to ± 30° of a horizontal viewing angle and ± 10° of a vertical viewing angle. Beyond this angular range, unacceptable ghost images may be generated, in particular, since the viewing apparatus cannot reject an undesired polarization down to a sufficiently low level. Further, the viewing apparatus according to the present invention may not require external power.

For further details concerning the use of the system reference may be made to the description of the system and/or the arrangement above and/or below.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:
- Figure 1: schematically illustrates an interaction of different kinds of objects with an incident electromagnetic field of pure helicity ±1;
- Figure 2: schematically presents a procedure for a double resonant enhancement for circular dichroism measurements; and
- Figure 3: schematically illustrates a system comprising two slabs, each of the slabs having a plurality of chiral objects of opposite handedness.

### Detailed description of the embodiments

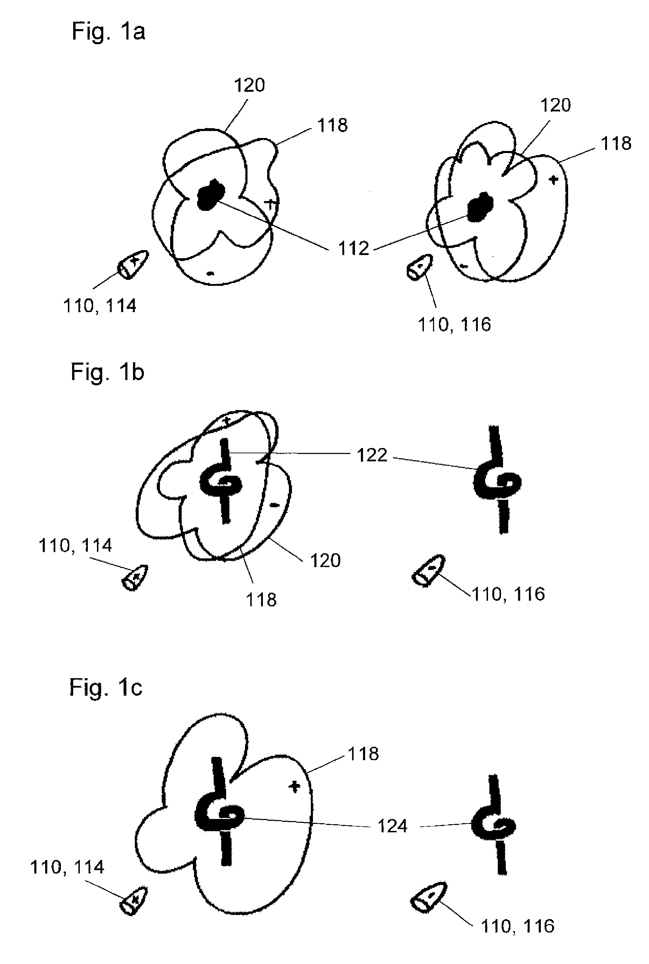

Fig. 1 schematically illustrates an interaction of different kinds of objects with an incident electromagnetic field 110 of pure helicity of ± 1.

Fig. 1A, left partition, depicts a general object 112 which is impinged by the incident electromagnetic field 110 comprising a pure helicity of +1, 114, whereas Fig. 1A, right partition, depicts the general object 112 being impinged by the incident electromagnetic field 110 comprising the pure helicity of -1, 116. As known from the state of the art, the general object 112 absorbs a part of the incident electromagnetic field 110 and/or scatters the incident electromagnetic field 110 in a manner that both a first scattered electromagnetic field 118 comprising the pure helicity of +1 and a scattered electromagnetic field 120 comprising the pure helicity of -1 are, concurrently, generated and mixed.

Further, Fig. 1B, left partition, depicts a non-reciprocal chiral object 122 which is impinged by the incident electromagnetic field 110 comprising the pure helicity of+1, 114, whereas Fig. 1B, right partition, depicts the non-reciprocal chiral object 122 being impinged by the incident electromagnetic field 110 comprising the pure helicity -1, 116. In contrast to the general object 112, the non-reciprocal chiral object 122 is designed to scatter only one kind of helicity, in Fig. 1B the helicity of +1, in a manner that it is transparent to the helicity with the opposing sign, which in Fig. 1B has the helicity of -1.

Further, Fig. 1C, left partition, depicts the chiral object 124 according to the present invention which is impinged by the incident electromagnetic field 110 comprising the pure helicity of+1, 114, whereas Fig. 1C, right partition, depicts the chiral object 124 according to the present invention being impinged by the incident electromagnetic field 110 comprising the pure helicity of -1, 116. As illustrated in Fig. 1C, the object 124 of this kind may also be referred to as a "reciprocal chiral object" 124 which, in addition, to being transparent to the one kind of helicity, in Fig. 1C the helicity of-1, as the non-reciprocal chiral object 122 additionally preserves helicity. Schematically, the chiral object 124 according to the present invention is depicted here as an object which comprises a single-turn helix element. As a result, the scattered electromagnetic field as generated by the chiral object 124 according to the present invention 124 has the same helicity as the incident electromagnetic field 110. Thus, the reciprocal chiral object 124 according to the present invention exhibits electromagnetic duality symmetry.

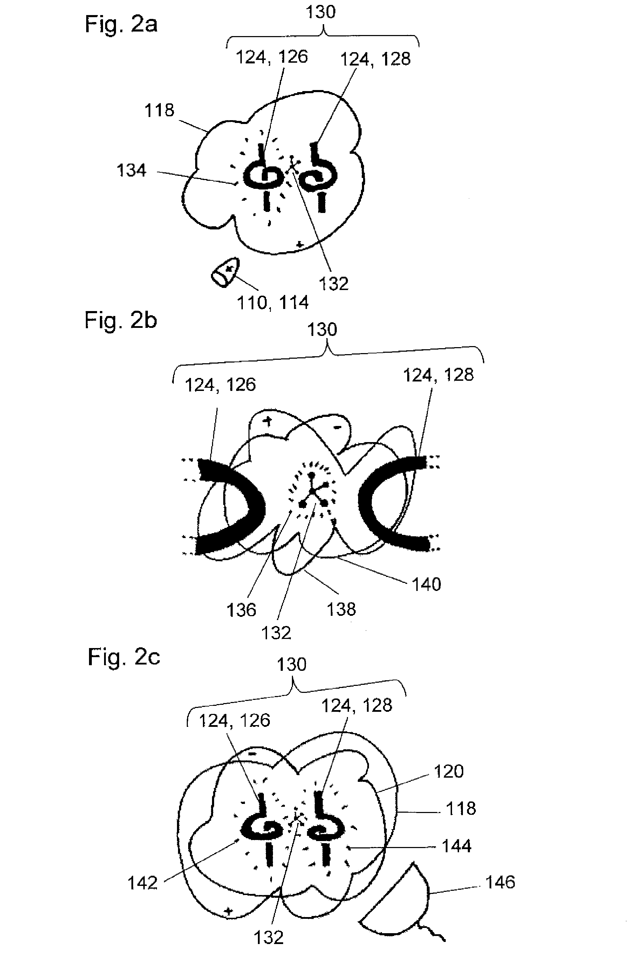

Fig. 2 schematically presents a scheme for a procedure for achieving a double resonant enhancement in circular dichroism measurements. Herein, Figs. 2A to 2C depict a first half of the circular dichroism measurements.

Fig. 2A illustrates two of the chiral objects 124 according to the present invention, wherein the left object is a first chiral object 126 of this kind comprising a helicity of +1 while the right object is a second chiral object 128 of this kind comprising a helicity of -1. Both chiral objects 124 of opposing helicity which are closely located with respect to each other form an arrangement 130 according to the present invention. Further, in this particular example of Fig. 2A, a chiral molecule 132 is, additionally, placed in a vicinity of the chiral objects 124. Herein, an external illumination provided by the incident electromagnetic field 110 comprising the pure helicity of +1, 114, is capable of exciting only the first chiral object 126, whose resonance is able to illuminate the chiral molecule 132 with a strong scattered electromagnetic field 134 which comprises the same helicity +1 as the incident electromagnetic field 110, 114.

Further, Fig. 2B illustrates the two chiral objects 124 of Fig. 2A in an enlarged presentation. Consequently, only a partition of the first chiral object 126 and a partition of the second chiral object 128 are depicted. Upon illumination with the strong scattered electromagnetic field 134 which comprises the helicity +1, the chiral molecule 132, which behaves as one of the general objects 112 as illustrated in Fig. 1A, absorbs a part of the incident electromagnetic field 110 and generates a weak scattering field 136 comprising both a first scattered electromagnetic field 138 of pure helicity +1 and a scattered electromagnetic field 140 of pure helicity-1 in a mixed fashion. As a result, the weak scattering field 136 excites the two resonant objects chiral objects 124 according to the present invention.

Further, Fig. 2C again illustrates the two chiral objects 124 according to the present invention which both comprise a resonance which is able to generate further strong scattered electromagnetic fields 142, 144 each comprising the same helicity as the corresponding helicity of the chiral objects 124 of this kind. As further depicted in Fig. 2C, the strong scattered electromagnetic field 144 having a helicity of -1, i.e. opposite to the helicity of the incident electromagnetic field 110, 114 of Fig. 2A, is measured, here by using a suitable detector 146. As can be derived by comparing Fig. 2C with Fig. 2A, the strong scattered electromagnetic field 144 exists only due to the presence of the molecule. Placing the detector 146 into the arrangement 126 of Fig. 2A without the chiral molecule 132 would provide a zero detection result.

In order to complete the procedure for the double resonant enhancement for the circular dichroism measurement, the scheme as schematically depicted in Figs. 2A to 2C is complemented by performing a second half of the circular dichroism measurement, thereby interchanging the helicities of the incident electromagnetic field 110 and the detector 146. Thus, the incident electromagnetic field 110, 116 is now selected for the helicity of -1 while the detector is now sensitive to the helicity of +1. Finally, the difference between the results obtained in the first half and in the second half of the circular dichroism measurements is compared. By using the arrangement 126 according to the present invention, two resonant enhancements can be perceived, i.e. a first enhancement in an amplification of the illumination of the incident electromagnetic field 110 and a second enhancement in an amplification of the weak scattering field 136 as generated by the chiral molecule 132.

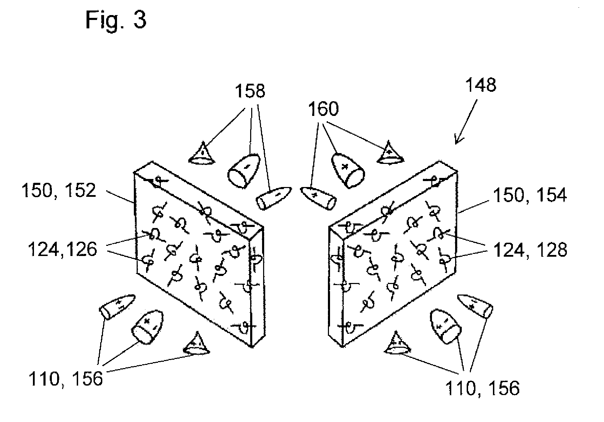

Fig. 3 schematically illustrates a system 148 comprising two slabs 150, wherein each of the slabs 150 comprises a plurality of the chiral objects 124 as described above of opposite handedness. Herein, a first slab 152 has a first plurality of the first chiral objects 124, 126 of helicity +1 while the second slab 154 has a second plurality of the second chiral objects 124, 128 of helicity -1. For the purposes of the present invention, both slabs 150 are illuminated by a mixed incident electromagnetic field 156 which comprises both helicities of+1 and of-1 in an arbitrary fashion.

As depicted in Fig. 3, the first slab 152 having the first plurality of the first chiral objects 124, 126 of helicity +1 only allows passing a first partition 158 of the electromagnetic field which only comprises the helicity -1. Similarly, the second slab 154 having the second plurality of the second chiral objects 124, 128 of helicity -1 only allows passing a second partition 160 of the electromagnetic field which only comprises the helicity +1. Thus, for the slabs 150 being large enough and comprising a sufficient thickness, particle density, and losses, each slab 150 filters out one kind of the helicities by absorption whereas the other kind of the helicities passes right through.

Since the behavior as presented in Fig. 3 is independent of the angle of incidence, the system 148 comprising the two slabs 150 can be used for viewing three-dimensional projections where the images are encoded in the two circular polarizations. Due to the random distribution of the chiral objects 124 in each of the slabs 150, the system 148 would allow obtaining a three-dimensional image even at an arbitrary angle with respect to the perpendicular from a projector.

### List of reference signs

- 110: incident electromagnetic field
- 112: general object
- 114: incident electromagnetic field of helicity +1
- 116: incident electromagnetic field of helicity -1
- 118: first scattered electromagnetic field
- 120: second scattered electromagnetic field
- 122: non-reciprocal chiral object
- 124: chiral object according to the present invention
- 126: first chiral object
- 128: second chiral object
- 130: arrangement
- 132: chiral molecule
- 134: strong scattered electromagnetic field
- 136: weak scattering field
- 138: first scattered electromagnetic field
- 140: second scattered electromagnetic field
- 142: (first) strong scattered electromagnetic field
- 144: (second) strong scattered electromagnetic field
- 146: detector
- 148: system
- 150: slab
- 152: first slab
- 154: second slab
- 156: mixed incident electromagnetic field
- 158: first partition of the electromagnetic field
- 160: second partition of the electromagnetic field

## Claims

1. An arrangement (130) comprising at least two chiral objects (124), wherein the chiral objects (124) are closely located with respect to each other, wherein a first chiral object (126) is additionally designed for scattering and/or absorbing only a first polarization handedness of an incident electromagnetic field (110) in a manner that an electromagnetic field scattered by the first chiral object (126) only comprises the first polarization handedness and, further, for being transparent to a second polarization handedness of the incident electromagnetic field (110), wherein a second chiral object (128) is additionally designed for scattering and/or absorbing only the second polarization handedness of the incident electromagnetic field (110) in a manner that an electromagnetic field scattered by the second chiral object (128) only comprises the second polarization handedness and, further, for being transparent to the first polarization handedness of the incident electromagnetic field (110), wherein the first polarization handedness and the second polarization handedness comprise an opposite sign.

2. The arrangement (130) according to the preceding claim, wherein the chiral objects (124) are designed in a manner that an intensity of the incident electromagnetic field (110) which impinges on the arrangement (130) is enhanced by that chiral object (124) which is designed for scattering and/or absorbing the same polarization handedness as comprised by the incident electromagnetic field (110).

3. The arrangement (130) according to any one of the preceding claims, wherein the chiral object (124) comprises a single-turn helix element.

4. The arrangement (130) according to any one of the preceding claims, wherein the incident electromagnetic field (110) is at least one of a far electromagnetic field, an intermediate electromagnetic field, or a near electromagnetic field.

5. The arrangement (130) according to any one of the preceding claims, further comprising at least one detector (146) adapted for determining at least one helicity of the incident electromagnetic field (110) which impinges on the detector (146).

6. The arrangement (130) according to the preceding claim, wherein the detector is adapted for determining at least one property of the incident electromagnetic field (110), wherein the property comprises at least one of an intensity, a power, an amplitude, a helicity, a wavelength, or a frequency of the incident electromagnetic field (110).

7. A use of the arrangement (130) according to any one of the preceding claims for circular dichroism measurements of at least one chiral molecule (132) located in a vicinity of the arrangement (130), wherein the measurements are adapted for providing a distinction between two possible enantiomers of the chiral molecule (132).

8. A system (148) comprising at least two pluralities of chiral objects (124), wherein each of the pluralities is randomly arranged in an individual volume separated from each other, wherein a first plurality of first chiral objects (126) is designed for scattering and/or absorbing only a first polarization handedness of an incident electromagnetic field (110) in a manner that an electromagnetic field scattered by the first chiral objects (126) only comprises the first polarization handedness and, further, for being transparent to a second polarization handedness of the incident electromagnetic field (110), wherein a second plurality of second chiral objects (128) is designed for scattering and/or absorbing only the second polarization handedness of the incident electromagnetic field (110) in a manner that an electromagnetic field scattered by the second chiral objects (128) only comprises the second polarization handedness and, further, for being transparent to the first polarization handedness of the incident electromagnetic field (110), wherein the first polarization handedness and the second polarization handedness comprise an opposite sign.

9. The system (148) according to the preceding claim, wherein each of the pluralities is arranged as an individual slab (150).

10. The system (148) according to the preceding claim, wherein the slabs (150) are located in an angle with respect to each other.

11. The system (148) according to any one of the two preceding claims, wherein the incident electromagnetic field (110) which impinges on the slab (150) which comprises that plurality of the chiral objects (124) which is designed for scattering and/or absorbing the same polarization handedness as comprised by the incident electromagnetic field (110) at least partially absorbs the incident electromagnetic field (110).

12. The system (148) according to any one of the four preceding claims, wherein each of the chiral objects (124) comprise a single-turn helix element.

13. The system (148) according to any one of the five preceding claims, wherein the incident electromagnetic field (110) is at least one of a far electromagnetic field, an intermediate electromagnetic field, or a near electromagnetic field.

14. A use of a system (148) according to any one of the six preceding claims as part of a viewing apparatus for three-dimensional images, wherein the three-dimensional images are encoded in two opposite circular polarizations.

15. The use according to the preceding claim, wherein the viewing apparatus is adapted for projecting three-dimensional images independent of an angle under which an incident electromagnetic field (110) impinges on the viewing apparatus.
